# EUROPEAN PATENT APPLICATION

(11) **EP 2 518 306 A1**
(43) Date of publication of application: **31.10.2012**
(21) Application number: 11163927.4
(22) Date of filing: 27.04.2011
(51) Int. Cl.: F03D 1/00, F03D 11/00, F03D 11/04, E04H 9/02

(54) **Bearing assembly for a transition piece of a wind turbine tower**

(71) Applicant: Tekmar Energy Limited, Millennium Way Newton Aycliffe Durham DL5 6AR (GB)
(72) Inventor: Ritchie-Bland, James, Newton Aycliffe Co Durham, DL5 6AR (GB)
(74) Representative: Vinsome, Rex Martin

(57) **Abstract**

A bearing assembly (2) comprising a plurality of bearing parts (6, 8, 10) is disclosed. Each bearing part comprises alternating layers of a first stiffness and a second stiffness, less than the first stiffness, and bonded to each other. At least one first layer (22, 34, 36, 58) has a respective non-planar engaging portion (24, 26, 38, 40) adapted to engage an engaging portion of a further bearing part to resist sliding movement of the bearing parts relative to each other.

## Description

The present invention relates to bearing assemblies, and relates particularly, but not exclusively, to bearing assemblies for use in supports for offshore wind turbines.

Offshore wind turbines for electricity generation often comprise a monopile driven into the seabed, a transition piece extending upwardly from the top of the monopile, and a wind turbine mounted on the transition piece. Because of the size of the wind turbine assemblies, the support tower comprising the monopile and the transition piece are assembled by first locating the monopile in the seabed, and then mounting the transition piece on top of the monopile.

In order to mount the transition piece to the monopile, the lower periphery of the transition piece extends around the upper periphery of the monopile, and a grout seal is formed in the gap between the monopile and the transition piece. In order to enable the grout seal to be formed, radially inwardly protruding brackets, which are attached to the inner surface of the transition piece by welding, act as jacking points to enable the transition piece to be lifted by jacking, so that the grout can be poured and allowed to set and the jacks then removed. However, this arrangement suffers from the drawback that as a result of vibrations, the transition piece often gradually moves downwards relative to the monopile.

Preferred embodiments of the present invention seek to limit downward movement of the transition piece relative to the monopile.

According to an aspect of the present invention, there is provided a bearing assembly comprising:-
a plurality of bearing parts, wherein each said bearing part comprises at least one first layer having a first stiffness, and at least one second layer having a second stiffness, less than said first stiffness, and bonded to at least one said first layer, wherein at least one said first layer has a respective non-planar engaging portion adapted to engage a said engaging portion of a further said bearing part to resist sliding movement of said bearing parts relative to each other.

By providing at least one first layer having a non-planar engaging portion adapted to engage an engaging portion of a further bearing part to resist sliding movement of the bearing parts relative to each other, this provides the advantage of enabling the bearing assembly to be made from fewer parts, and therefore to be more compact. This in turn enables the bearing assembly to be easier to carry, which is a significant advantage with regard to offshore wind turbines, in which heavy lifting equipment may not be available.

At least one said engaging portion may comprise at least one protrusion and/or recess provided on an external surface of the corresponding said first layer.

At least one said first layer may comprise at least one metal.

At least one said metal may comprise steel.

At least one said second layer may comprise at least one elastomeric material.

At least one said elastomeric material may comprise polyurethane.

The assembly may further comprise flexing resisting means for resisting flexing of a bearing comprising a plurality of said bearing members when a bending moment applied to said bearing exceeds a predetermined value.

By providing flexing resisting means for resisting flexing of a bearing comprising a plurality of said bearing members when a bending moment applied to said bearing exceeds a predetermined value, this provides the advantage of minimising the risk of failure of the bearing in use.

Said flexing resisting means may comprise at least one engaging member extending from a first said bearing member and passing through a respective aperture in at least one said second bearing member.

At least one said aperture may be sized so as to contact the corresponding said engaging member only when a bending moment applied to said bearing exceeds a predetermined value.

This provides the advantage of minimising the extent to which the flexing resisting means interferes with operation of the bearing before said predetermined value is exceeded.

At least one said second layer may have a concave periphery.

This provides the advantage of enabling the stress resisting capacity of the second layer to be increased.

At least one said first layer may comprise a respective recess on an external surface thereof for locating a bearing comprising the bearing member on a support.

According to another aspect of the present invention, there is provided a bearing formed from a bearing assembly as defined above, wherein a said engaging portion of a first said bearing part engages a said engaging portion of a second said bearing part.

A preferred embodiment of the invention will now be described, by way of example only and not in any limitative sense, with reference to the accompanying drawings, in which:-
Figure 1 is a perspective view of a bearing embodying the present invention;
Figure 2 is an exploded view of a bearing assembly forming the bearing of Figure 1;
Figure 3 is a plan view of the bearing of Figure 1;
Figure 4 is a view from below of the bearing of Figure 1;
Figure 5 is a front view of the bearing of Figure 1;
Figure 6 is a side view of the bearing of Figure 1;
Figure 7 is a cross sectional view along the line C-C in Figure 6;
Figure 8 is a perspective view of the bearing of Figure 1 located between a bracket of a transition piece and the upper periphery of a monopile;
Figure 9 is a side view of the arrangement of Figure 8;
Figure 10 is a front view of the arrangement of Figure 8; and
Figure 11 is a top view of the arrangement of Figure 8.

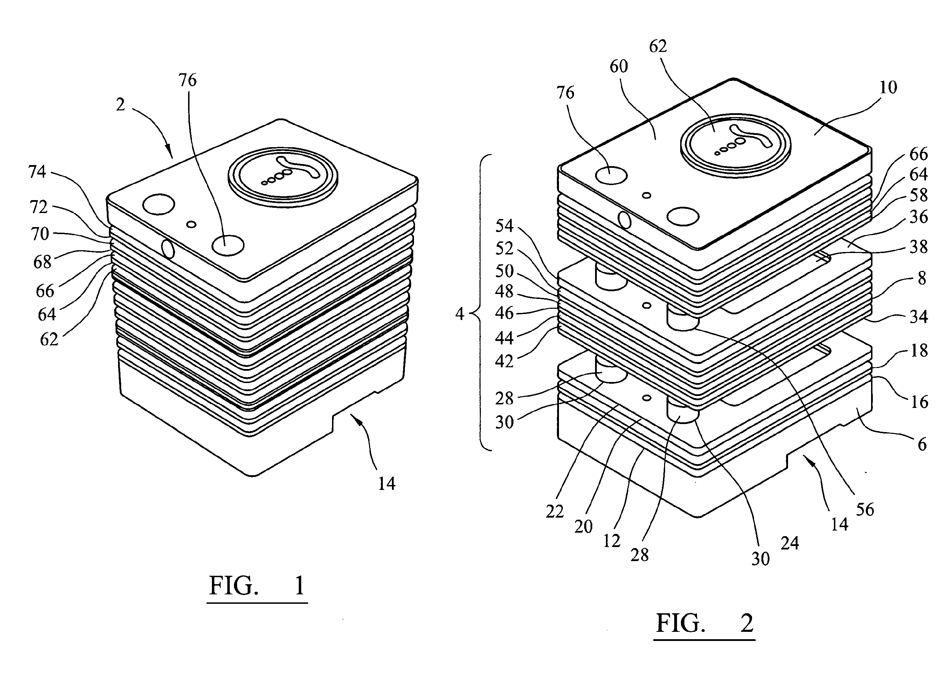

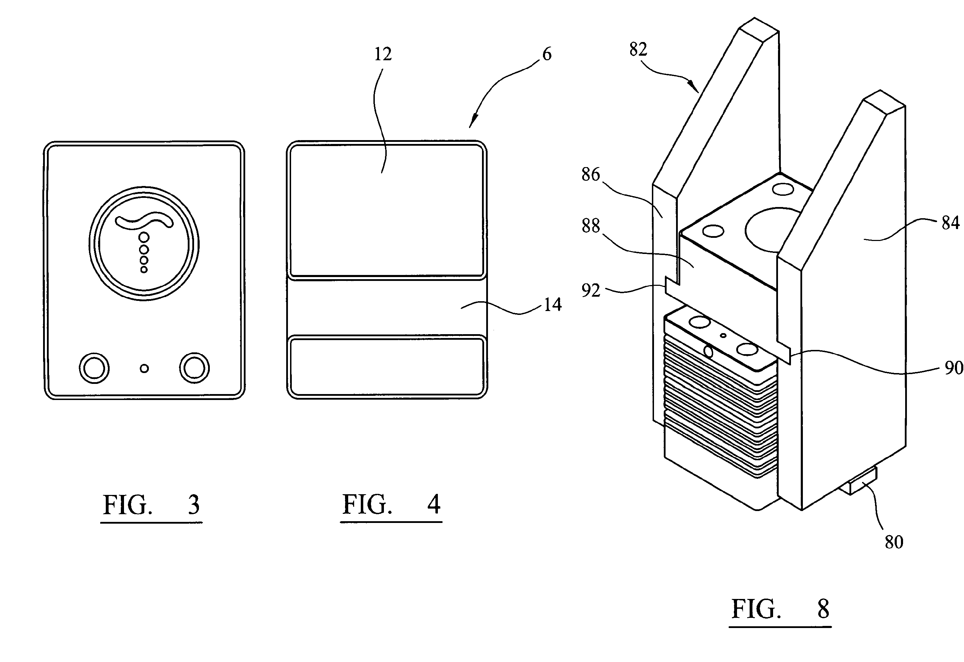

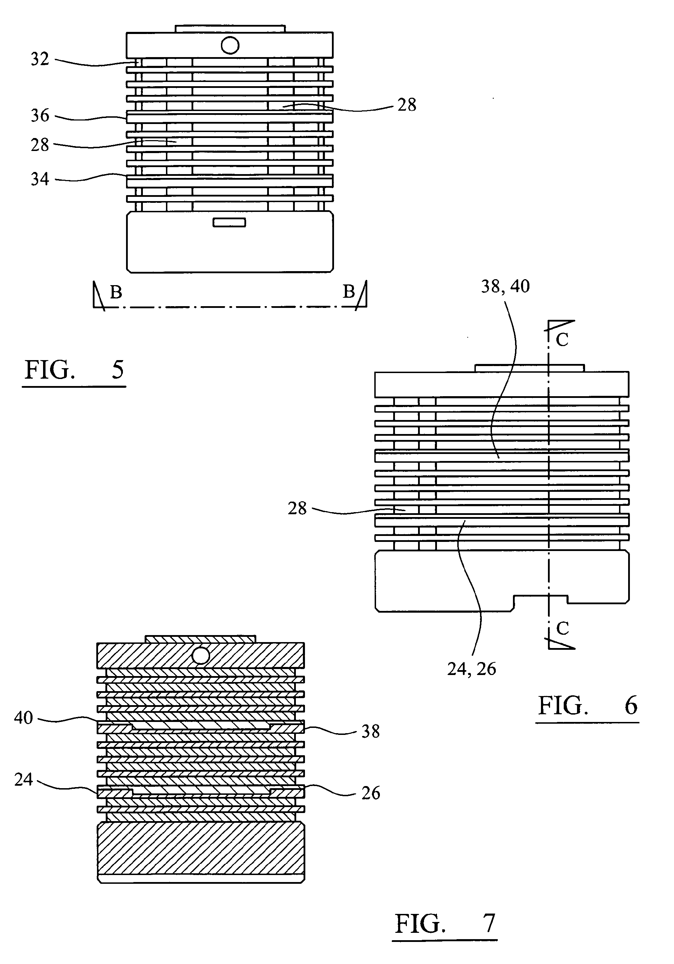

Referring to Figures 1 to 7, a bearing 2 embodying the present invention comprises an assembly 4 including a base part 6, a core part 8, and a top part 10 adapted to fit together to form the bearing 2 for mounting to an upper periphery 80 (Figure 8) of a monopile (not shown) of an offshore wind turbine and to support brackets 82 (Figure 8) mounted to a transition piece (not shown) to enable the transition piece to be supported by the monopile. The base part 6 has a generally rectangular steel body 12 in which a groove 14 (Figure 4) is provided for locating the bearing 2 on the upper periphery 80 of the monopile. The base part 6 is also provided with two polyurethane layers 16, 18 bonded to alternating steel layers 20, 22 respectively, the upper steel layer 22 having a recess 24 for receiving a corresponding protrusion 26 (Figure 6) provided on the lower surface of the core part 8. A pair of rigid steel bars 28 are mounted to the body 12 of the base part 6 extend through apertures 30 in the alternating steel and polyurethane layers 16, 18, 20, 22, the apertures 30 having an internal diameter slightly larger than the external diameter of the steel bars 28, so that the steel bars 28 do not come into contact with the polyurethane or steel layers 16, 18, 20, 22 unless a bending moment exceeding a predetermined threshold is applied to the bearing 2. The polyurethane layers 16, 18 have concave peripheral surfaces 32, the purpose of which will be described in greater detail below.

The core part 8 has a lower steel plate 34 from which the protrusion 26 extends for engaging the recess 24 on the upper steel plate 22 of the base part 6, an upper steel plate 36 having a recess 38 for receiving a protrusion 40 (Figure 6) on top part 10, and alternating steel and polyurethane layers 42, 44, 46, 48, 50, 52 arranged between the upper 36 and lower 34 steel plates. The layers 42, 44, 46, 48, 50, 52 and plates 34, 36 of the core part 8 have apertures 56 through which the steel bars 28 pass, the apertures 56 having a diameter slightly larger than the external diameters of the steel bars 28. The polyurethane layers 42, 46, 50, 54 have concave external peripheral surfaces similar to the layers 16, 18 of the base part 6.

The top part 10 has a lower steel plate 58 from which protrusion 40 (Figure 7) extends to engage the recess 38 in the upper steel plate 36 of the core part 8, an upper steel plate 60 having a circular region 62 for engaging the bracket 82 mounted to the transition piece (not shown) and alternating steel and polyurethane layers 62, 64, 66, 68, 70, 72, 74 (Figure 1) arranged between the lower steel plate 58 and the upper steel plate 60. The plates 58, 60 and layers 62, 64, 66, 68, 70, 72, 74 also have apertures 76 having a diameter slightly larger than the external diameter of the steel bars 28, which pass through the apertures 76.

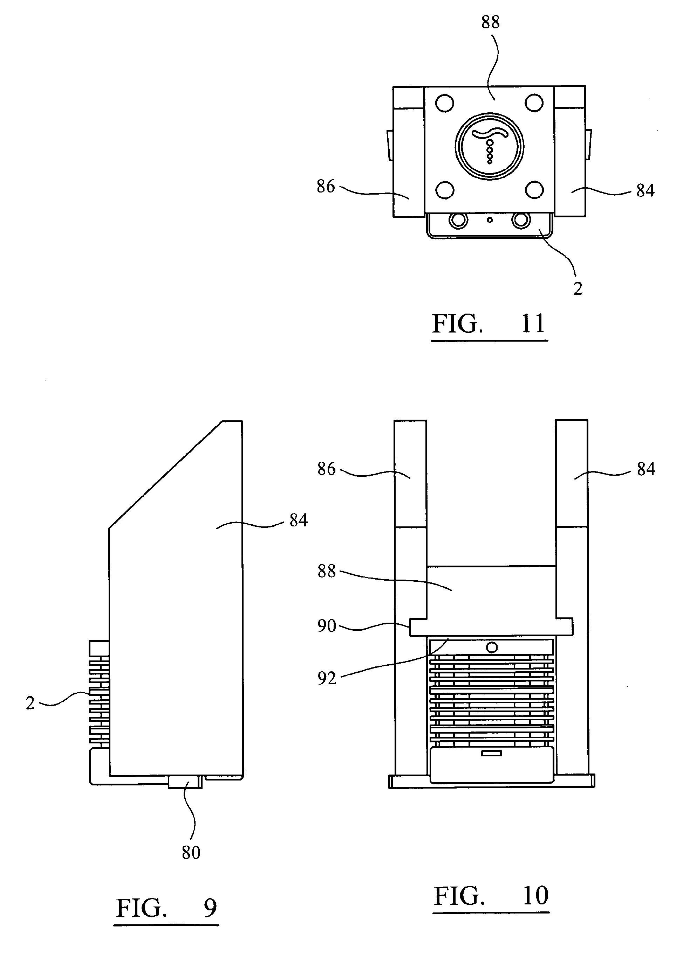

The operation of the bearing 2 shown in Figure 1 will now be described with reference to Figures 8 to 11.

A number of bearings 2, typically six, are arranged equi-angularly around the upper periphery 80 of the monopile on which the transition piece is to be supported such that the upper periphery 80 engages the groove 14 in the lower surface of each bearing 2. The bearings 2 can be transported to this location as separate components by separating each bearing 2 into the base part 6, core part 8 and top part 10.

Each of the brackets 82 has a pair of support plates 84, 86 welded to the transition piece (not shown) and between which a main plate 88 is mountable by sliding in groove 90. An optional shim 92 can be located between the main plate 90 and the upper surface of the bearing 2.

The transition piece is then placed on top of the bearings 2 such that the load is transferred via the main plate 90 to the circular loading part 62 on the upper steel plate 60 of the top part 10. As shown in Figure 6, the centre of the loading part 62 is slightly displaced from the centre of the recess 14 arranged at the lower part of the base part 6. As a result, a bending moment is applied to each bearing 2 by the weight of the transition piece. This causes the steel plates and alternating steel and polyurethane layers to flex, and the concave peripheral surfaces of each of the polyurethane layers maximises the extent to which the polyurethane layers can flex. When the bending moment exceeds a predetermined value, the peripheries of the apertures 30, 56, 76 through some of the steel plates and steel and polyurethane layers contact the steel bars 28, which resist further flexing of the layers and minimise the risk of failure of the bearings 2.

It will be appreciated by persons skilled in the art that the above embodiment has been described by way of example only, and not in any limitative sense, and that various alterations and modifications are possible without departure from the scope of the invention as defined by the appended claims.

## Claims

1. A bearing assembly comprising:-
a plurality of bearing parts, wherein each said bearing part comprises at least one first layer having a first stiffness, and at least one second layer having a second stiffness, less than said first stiffness, and bonded to at least one said first layer, wherein at least one said first layer has a respective non-planar engaging portion adapted to engage a said engaging portion of a further said bearing part to resist sliding movement of said bearing parts relative to each other.

2. An assembly according to claim 1, wherein at least one said engaging portion comprises at least one protrusion and/or recess provided on an external surface of the corresponding said first layer.

3. An assembly according to any one of the preceding claims, wherein at least one said first layer comprises at least one metal.

4. An assembly according to claim 3, wherein at least one said metal comprises steel.

5. An assembly according to any one of the preceding claims, wherein at least one said second layer comprises at least one elastomeric material.

6. An assembly according to claim 5, wherein at least one said elastomeric material comprises polyurethane.

7. An assembly according to any one of the preceding claims, further comprising flexing resisting means for resisting flexing of a bearing comprising a plurality of said bearing members when a bending moment applied to said bearing exceeds a predetermined value.

8. An assembly according to claim 7, wherein said flexing resisting means comprises at least one engaging member extending from a first said bearing member and passing through a respective aperture in at least one said second bearing member.

9. An assembly according to claim 8, wherein at least one said aperture is sized so as to contact the corresponding said engaging member only when a bending moment applied to said bearing exceeds a predetermined value.

10. An assembly according to any one of the preceding claims, wherein at least one said second layer has a concave periphery.

11. An assembly according to any one of the preceding claims, wherein at least one said first layer comprises a respective recess on an external surface thereof for locating a bearing comprising the bearing member on a support.

12. A bearing formed from a bearing assembly according to any one of the preceding claims, wherein a said engaging portion of a first said bearing part engages a said engaging portion of a second said bearing part.
